# EUROPEAN PATENT SPECIFICATION

(11) **EP 3 067 323 B1**
(45) Date of publication and mention of the grant of the patent: **27.12.2017**
(21) Application number: 16159408.0
(22) Date of filing: 09.03.2016
(51) Int. Cl.: C01G 53/04, C01G 53/00, B01J 23/00, B01J 23/755, B01J 37/03, B01J 35/06

(54) **METHOD FOR PRODUCING NANOFIBERS COMPOSED OF NIO AND NIAL2O4 AS WELL AS PRODUCT COMPRISING SAID NANOFIBERS**
VERFAHREN ZUR HERSTELLUNG VON NANOFASERN AUS NIO UND NIAL2O4 SOWIE PRODUKT MIT DEN BESAGTEN NANOFASERN
PROCÉDÉ DE PRODUCTION DE NANOFIBRES COMPOSÉES DE NIO ET NIAL2O4 AINSI QUE PRODUIT COMPRENANT LESDITES NANOFIBRES

(30) Priority: 10.03.2015 GB 201504007
(43) Date of publication of application: 14.09.2016
(73) Proprietor: Tallinn University of Technology, 19086 Tallinn (EE)
(72) Inventor: AGHAYAN, Marina, 19086 Tallinn (EE); HUSSAINOVA, Irina, 19086 Tallinn (EE)
(74) Representative: Sarap, Margus

(56) References cited:
- CN-A- 1 556 031
- CN-B- 101 580 279
- MARINA AGHAYAN ET AL: "Fabrication of NiO/NiAl2O4 Nanofibers by Combustion Method", KEY ENGINEERING MATERIALS, vol. 674, 22 January 2016 (2016-01-22), pages 31-34, XP055288625, DOI: 10.4028/www.scientific.net/KEM.674.31

## Description

### Technical Field

The invention relates to a method for producing nanofibers composed of NiO and NiAl₂O₄ by combustion techniques and a product comprising nickel oxide doped nickel aluminate spinel nanofibers NiO/NiAl₂O₄ produced according to said method, where the amount of NiO is up to 40 wt. %.

### Background Art

Nickel aluminate (NiAl₂O₄) is a transition metal ion spinel material with common spinel structure, in which Al occupies the octahedral and Ni the tetrahedral sites. Nickel aluminate exhibits good chemical stability in acidic and alkaline conditions. It has a high melting point and a stable structure at high temperatures [1]. Moreover, nickel aluminate and/or nickel oxide doped nickel aluminate is considered a very effective catalyst material in many chemical processes [1-6]. Therefore, NiAl₂O₄ and/or NiO/NiAl₂O₄ composition is extremely important material for many industrial applications, including catalysis.

Usually, the nickel aluminate spinel powder is synthesised by the high-temperature solid-state reactions between the constituent oxides. The produced particles are large in size (≥ 1 µm (micrometer)) and of wide size distribution. Several preparation methods have been applied to obtain the crystalline nickel aluminate spinels with a smaller particle size, among others there are: sol-gel synthesis, sono-chemical method, microwave heating, mechano-chemical [7] and polymer solution. Solution combustion is one of the advantageous methods for synthesis of the nickel aluminate powder using the well adjusted proportions of nickel and aluminium nitrates.

The essential requirements for the preparation of the materials with well controlled uniformity and high-purity encourages the development of wet chemical methods described in Chinese patent CN 101580279 B [8]. The method comprises steps of adding nickel nitrate into suspension liquid of nano-grade aluminium oxide, adding dispersant, stirring to obtain a mixed solution, dropping ammonia to obtain nickel-ammonia complex ([Ni(NH₃)₆] ²⁺)-alumina mixed solution, adding water under stirring, centrifuging to obtain green precipitate, washing with water and ethanol, drying to obtain precursor powder, and carrying out carbothermal reduction calcination to obtain the final product - nano-powder of NiAl₂O₄ having particles with average particle size (≤ 100 nm (nanometer)). Said method is simple, has low cost, low calcination temperature and good repeatability.

One of the important methods to prepare aluminates is a combustion route described in another patent application CN 1556031 A [9]. A process includes proportionally mixing the nickel nitrate, aluminium nitrate and urea to obtain solution, which was put in preheated furnace. As a result foamed NiAl2O4 material was obtained. The advantage of the solution combustion technique is the quasi-atomic dispersion of the component cations in liquid precursors, which facilitates synthesis of the crystallized powder with a small particle size and a high purity at low temperatures [10].

Leal et al. [12] prepared NiAl₂O₄ catalysts via the combustion route by mixing nickel nitrate, aluminium nitrate and glycine to obtain a solution which was heated on a hot-plate at 500°C until self-ignition and combustion occurred. The product was a powder in the form of irregular plate-shaped agglomerates.

One-dimensional (1D) structures have received increasing attention due to their specific properties and potential applications. Furthermore, the development of methods for synthesizing a wide variety of 1D structures made out of novel materials has become increasingly important. Their configurations with a large specific surface area indicate their potentially useful physical and chemical properties. Accordingly, a variety of applications, including electrodes, sensors, and insulators, is expected.

Kim et al. [11] have succeeded in growing cubic submicron-sized NiAl₂O₄ rods on sapphire substrates by means of heating mixture of NiO and graphite powders. According to the SEM images given in the paper the diameter of the rods is > 100 nm (nanometer) and the length is less than 3 µm (micrometer).

However, to the best of our knowledge, no attempt has been reported on the preparation of NiAl₂O₄ nanofibers of a higher aspect ratio.

### Summary of invention

The invention relates to production of nanofibers with a composition of NiO/NiAl₂O₄ by the solution combustion. The invention relates to a method for producing nanofibers as claimed in claim 1, a composition comprising nanofibers as claimed in claims 2-4.

The present invention proposes a method for producing nickel aluminate doped or undoped nickel aluminate spinel nanofibers via the glycine-assisted combustion method. In the said combustion method glycine is used as a source of energy, nickel nitrate as a source of nickel, alumina nanofibers as a source of aluminum and distilled water as a solvent (for example, to wet 1g alumina nanofiber 15 ml water was used).

Solution is prepared by dissolving an appropriate amount of Ni(NO₃)2*6H₂ O and glycine in a deionized water. The amount of water is adjusted according to the material to be obtained (depending on the amount of NiO in NiO/NiAl₂O₄).

The said solution is dropped slowly on the alumina nanofibers and transferred to a furnace preheated to 400 °C, where ignition takes place. The sample is taken out from the furnace in 30 min.

The beneficial effects of the present invention are: a low cost of raw materials, the possibility of the reaction directly in air, the required equipment is simple and ease in operation. In addition, the reaction temperature of preheating is low and the reaction goes instantaneously with low energy consumption and a low production cost whereas the obtained structures have a controllable size and controllable aspect ratio.

### Brief description of drawings

These and other aspects will become apparent and more readily appreciated from the following description of the embodiments, taken in conjunction with the accompanying drawings of which:
Fig. 1. is a diagram showing a X-ray diffraction pattern of NiO/NiAl₂O₄ nanofibres obtained according to the present invention;
Fig. 2 is a SEM images of the NiO/NiAl₂O₄ nanofibres product where a) the said product, b) the said product after heat treatment at 900 °C for 2 hours and c) the said product after heat treatment at 900 °C for 8 hours.

### Description of embodiments

The present invention proposes a method of synthesizing NiO/NiAl₂O₄ nanofibers by combustion using the alumina nanofibers, nickel (II) nitrate, glycine and deionized water as the precursors. The glycine is used as a source of energy and alumina nanofibers are used as a source of aluminum and nickel nitrate as a source of nickel. The wetted alumina nanofibers are treated in a preheated furnace at 400 °C for 30 min.

A method comprises the following steps where:
a. an appropriate amount (calculated for any specific case depending on the needed ratio of NiO and NiAl₂O₄) of nickel (II) nitrate hexahydrate and glycine are dissolved in deionized water at room temperature;
b. thereafter an obtained solution is dropped onto alumina nanofibers;
c. thereafter the wet nanofibers are aged at least for 20 min at room temperature,
d. the aged nanofibers are then transferred into a furnace preheated to 400 °C and dwelled for 30 min. The composition comprising NiO/NiAl₂O₄ obtained by the method according to the present invention has high structural thermal stability of the nanofibers up to the temperature of 900 °C during heat treatment of at least 10 hours. The nanofibers have the diameters of up to 50 nm and the aspect ratio of ≥10⁴. The NiO/NiAl₂O₄ structure comprises the following compositions in percentage by weight: up to 40 % of NiO and 60-100 % of NiAl₂O₄, wherein NiO is dispersed along the NiAl₂O₄ nanofibers homogeneously.

### Example 1

To obtain NiO/NiAl₂O₄ with the amount of nickel oxide of 40 wt.%, 5,70 g Ni(NO₃)2*6H₂O and 1,64 g glycine were dissolved in 15 ml distilled water. The obtained solution was fully dropped onto 2,00 g alumina nanofibers, aged for 20 min, and transferred into a preheated (400 °C) furnace and dwell for 30 min.

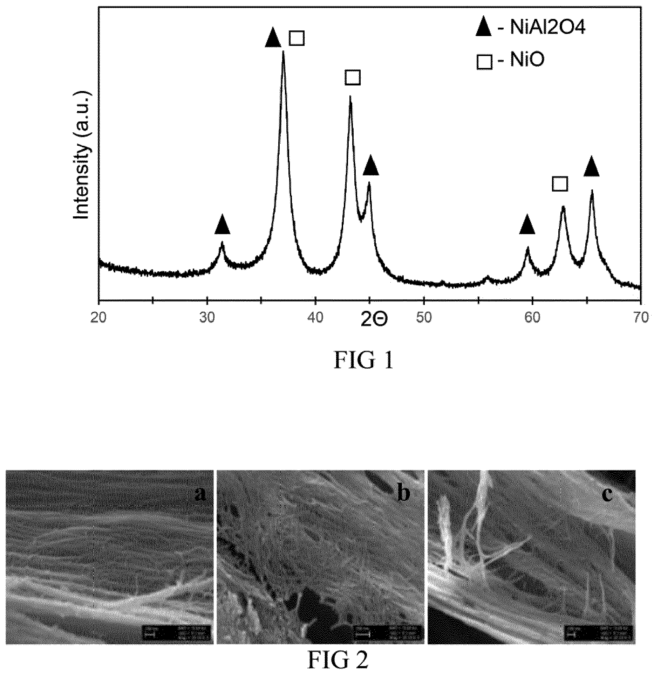

In Fig. 1, the X-ray diffraction pattern obtained from the said product is presented.

To study structural thermal stability of NiAl₂O₄, the specimens were heat treated up to 900 °C for 2 and 8 hours, respectively. SEM examination (see Fig. 2a, b, c) shows no evident changes in morphology of the NiAl₂O 4. The fibers do not agglomerate even after treating them for 8 hours at 900 °C (see SEM image in Fig. 2 c). The diameter of the fibers increases up to 50 nm when heated for 8 hours.

### Citation list

1. Fritz A., Pitchon V., The current state of research on automotive lean NOxcatalysis, Applied Catalysis B: Environmental, 13(1), 1997, pp. 1-25.
2. Fang H., Haibin L., Zengli Z., Advancements in Development of Chemical-Looping Combustion: A Review, Intern. J. Chem. Eng., 2009, Article ID 710515, doi:10.1155/2009/710515, 16 pages.
3. Mattisson T., Jerndal E., Linderholm C., Lyngfelt A., Reactivity of a spray-dried NiO/NiAl2O4 oxygen carrier for chemical-looping combustion, Chem. Eng. Sci., 66, 2011, pp. 4636-4644.
4. Salhi N., Boulahouache A., Petit C., Kiennemann A., Rabia C., Steam reforming of methane to syngas over NiAl2O4 spinel catalysts, Int. J. Hydrogen Energy, 36, 2011, pp. 1433-1439.
5. US 7396516 B2, Mary Fisher J., Ian Hyde T., Thompsett D., Manganese containing oxygen storage component comprising three-way catalyst composition.
6. Gonzalez J.C., Benito Lopez J.M., Rodriguez Barbero M.A., Rodriguez Ramos I., Guerrero Ruiz A., Development of Nanostructured Catalytic Membranes (NCMs) for Partial Benzene Hydrogenation to Cyclohexene, J. Nanosci. & Nanotech., 7, 2007, pp. 1-11.
7. Nazemi M.K., Sheibani S., Rashchi F., Gonzalez-DelaCruz V.M., Caballero A., Preparation of nanostructured nickel aluminate spinel powder from spent NiO/Al2O3 catalyst by mechano-chemical synthesis, Advanced Powder Technology 23, 2012, pp. 833-838.
8. CN 101580279B, Zhao Ch., Guo Y., Cang X., Preparation method of NiAl2O4 nano-powder.
9. CN 1556031A, Ning Xiaoshan, Sun Tao, Chen Kexin, Burning synthesis method of NiAl2O4 spinelle powder.
10. Aruna S.T., Mukasyan A.S., Combustion synthesis and nanomaterials, Current Opinion in Solid State and Materials Science, 12, 2008, pp. 44-50.
11. Kim S.S., Sun G.-J., Kim H.W., Kwon Y.J., Wu P., Thermochemical analysis on the growth of NiAl2O4 rods, RSC Adv., 4, 2014, pp. 1159-1162.
12. Elvia Leal; Ana Cristina Figueiredo de Melo Costa; Normanda Lino de Freita; Hlio de Lucena Lira; Ruth Herta Goldschmidt Aliaga Kiminami; Lucianna Gama, NiAl2O4 catalysts prepared by combustion, reaction using glycine as fuel, Materials Research Bulletin, 46(9), 2011, pp. 1409-1413

## Claims

1. A method for producing nanofibers of NiO/NiAl₂O₄ by the solution combustion wherein alumina nanofibers, nickel (II) nitrate, glycine and deionized water are used as precursors, method comprises the following steps where:
a) an appropriate amount, calculated for any specific case depending on the needed ratio of NiO and NiAl₂O₄, of nickel (II) nitrate and glycine are dissolved deionized water;
b) an obtained solution is dropped onto alumina nanofibers;
c) thereafter wet alumina nanofibers are aged for at least 20 min at room temperature; and
d) the aged nanofibers are then transferred into a furnace preheated up to 400 °C and treated for at least 30 min.

2. A composition comprising nanofibers of NiO/NiAl₂O₄ obtained according to the method in claim 1 wherein said nanofibers of NiO/NiAl₂O₄ have a diameter of up to 50 nanometer and an aspect ratio of ≥10⁴.

3. The composition according to claim 2 wherein said nanofibers of NiO/NiAl₂O₄ have the compositions in percentage by weight: up to 40 % of NiO and over 60 % of NiAl₂O4.

4. The composition according to claim 2 or 3 wherein the said nanofibers of NiO/NiAl₂O₄ have structural stability up to the temperature of 900 °C during heat treatment of at least 10 hours.

## Patentansprüche

1. Verfahren zur Herstellung von Nanofasern aus NiO/NiAl₂O₄ durch die Lösungsverbrennung, wobei Aluminiumoxid-Nanofasern, Nickel(II)-nitrate, Glycin und deionisiertes Wasser als Ausgangsstoffe verwendet werden und das Verfahren folgende Schritte umfasst:
a) fallspezifisch anhand der benötigten Ration von NiO und NiAl₂O₄ berechnete geeignete Menge von Nickel(II)-nitraten und Glycin wird in deionisiertem Wasser gelöst;
b) die erhaltene Lösung wird tropfenweise den Aluminiumoxid-Nanofasern hinzugefügt;
c) danach werden die feuchten Aluminiumoxid-Nanofasern für mindestens 20 Minuten bei Raumtemperatur stehen gelassen; und
d) die stehengelassenen Nanofasern werden dann in einen auf 400 °C vorgeheizten Ofen überführt und für mindestens 30 Minuten thermisch behandelt.

2. Zusammensetzung, enthaltend Nanofasern von NiO/NiAl₂O₄, erhalten durch die Methode gemäß Anspruch 1, wobei die genannten Nanofasern von NiO/NiAl₂O₄ einen Durchmesser von bis zu 50 Nanometer und ein Seitenverhältnis von ≥10⁴ haben.

3. Zusammensetzung gemäß Anspruch 2, wobei die Zusammensetzung der genannten Nanofasern von NiO/NiAl₂O₄ (in Gewichts-%) ist: bis zu 40 % NiO und über 60 % NiAl₂O₄.

4. Zusammensetzung gemäß Anspruch 2 oder 3, wobei die genannten Nanofasern von NiO/NiAl₂O₄ bei einer thermischen Behandlung von mindestens 10 Stunden bei 900 °C eine strukturelle Stabilität aufweisen.

## Revendications

1. Le procédé de production de nanofibres de NiO/NiAl₂O₄ par la combustion de solution, dans lequel les nanofibres d'alumine, du nitrate de nickel (II), de la glycine et de l'eau désionisée sont utilisés comme précurseurs, le procédé comprenant les étapes suivantes dans lesquels :
a) une quantité appropriée, calculée pour tout cas spécifique en fonction de la ration nécessaire de NiO et de NiAl₂O₄, de nitrate de nickel (II), et de glycine est dissoute dans l'eau désionisée;
b) la solution obtenue est appliquée sur les nanofibres d'alumine;
c) suit la maturation des nanofibres d'alumine pendant au moins 20 minutes à une température ambiante; et
d) les nanofibres maturées sont ensuite transférées dans un four préchauffé à 400 °C, et traitées pendant au moins 30 minutes.

2. Le composé comprenant des nanofibers de NiO/NiAl₂O₄, obtenues selon le procédé de la revendication 1, dans lequel lesdites nanofibres de NiO/NiAl₂O₄ sont d'un diamètre allant jusqu'à 50 nanomètres et sont d'un rapport d'aspect de ≥10⁴.

3. Le composé selon la revendication 2, dans laquelle lesdites nanofibres de NiO/NiAl₂O₄ possèdent des composés en pourcentage en poids: jusqu'à 40 % de NiO, et plus de 60 % de NiAl₂O₄.

4. Le composé selon la revendication 2 ou 3, dans laquelle lesdites nanofibres de NiO/NiAl₂O₄ sont d'une stabilité structurelle jusqu'à la température de 900 °C pendant le traitement thermique de durée d'au moins 10 heures.
